# FASCICULE DE BREVET EUROPEEN

(11) **EP 1 854 770 B1**
(45) Date de publication et mention de la délivrance du brevet: **02.05.2012**
(21) Numéro de dépôt: 06113693.3
(22) Date de dépôt: 09.05.2006
(51) Int. Cl.: C04B 16/06, C04B 28/02

(54) **Compositions de produits en fibres-ciment et produits façonnés obtenus à partir de telles compositions.**
Faserzement Zusammensetzungen und daraus hergestellte Produkte
Fiber cement compositions and products obtained therefrom

(43) Date de publication de la demande: 14.11.2007
(73) Titulaire: REDCO S.A., 1880 Kapelle-op-den-Bos. (BE)
(72) Inventeur: de Lhoneux, Benoît, 1367, Gérompont (BE); Alderweireldt,M. Lieven, 9031, Drongen (BE)
(74) Mandataire: Van Straaten, Joop

(56) Documents cités:
- EP-A- 0 363 891
- WO-A-01/14275
- JP-A- 2001 139 360

## Description

### Domaine de l'invention

L'invention se rapporte à une composition de produits en fibres-ciment comprenant des fibres de renforcement comprenant au moins des fibres à base de poly(alcool vinylique) (A) et des fibres organiques synthétiques (B).

L'invention se rapporte aussi aux produits façonnés en fibres-ciment fabriqués à l'aide d'une telle composition. A titre d'exemple de produits façonnés en fibres-ciment, on peut notamment citer des éléments de toiture et de façade, des plaques planes ou ondulées, des ardoises, des tuyaux et des réservoirs de stockage.

### État de la technique

Les produits façonnés en fibres-ciment sont fabriqués au départ d'une suspension aqueuse comportant des liants hydrauliques, des fibres de renforcement et de mise en oeuvre, et éventuellement des charges. Cette suspension aqueuse est mélangée afin d'obtenir une distribution uniforme des composants. La suspension est alors égouttée. Le produit frais ainsi obtenu peut ensuite être façonné, par exemple en forme de plaque plane, de plaque ondulée ou en forme de tuyau. Par la suite, on laisse durcir le produit frais façonné dans des conditions atmosphériques ou dans des conditions de pression, de température et d'humidité spécifiques.

Le procédé Hatschek est un procédé bien connu pour la fabrication de produits en fibres-ciment. Le procédé, initialement appliqué à l'amiante-ciment, est décrit exhaustivement dans l'ouvrage « Asbestzement » de Harald Klos (Springer Verlag, 1967). On peut également citer d'autres procédés de fabrication bien connus de l'homme du métier, tels que les procédés Magnani, Mazza, Flow-on, d'extrusion et d'injection.

Le procédé Hatschek, particulièrement adapté à la fabrication de produits finis en forme de plaque plane, de plaque ondulée ou de tuyau est basé sur l'utilisation de machines d'égouttage à tamis cylindrique. Ainsi, une couche provenant d'une suspension diluée de fibres, de ciment,de charges et d'additifs contenue dans un cuvier est transférée à un feutre, par l'intermédiaire d'un égouttoir cylindrique ; cette couche est ensuite enroulée sur un cylindre de formage jusqu'à l'obtention d'une épaisseur requise formant ainsi une plaque.

La plaque en fibres-ciment formée sur le cylindre de formage est coupée et détachée du cylindre, une fois l'épaisseur souhaitée atteinte. Cette plaque est alors soumise à une étape de mise en forme consistant, dans le cas des plaques ondulées, à la placer entre des tôles ondulées, par exemple en métal huilé. Ensuite, elle est soumise à une étape de durcissement.

Pour certaines applications, il s'avère utile de comprimer le produit frais entre l'étape de mise en forme et celle de durcissement (post-compression). On parle alors de produits façonnés en fibres-ciment comprimés, par opposition aux produits façonnés en fibres-ciment non comprimés.

Les produits en fibres-ciment comprimés sont comprimés entre l'étape de mise en forme et celle de durcissement à une pression égale ou supérieure à 4,9 MPa. Habituellement, les pressions appliquées sont comprises entre 9,8 MPa et 24,5 MPa.

Jusqu'il y a peu, beaucoup de produits en fibres-ciment étaient fabriqués à partir d'amiante-ciment. L'amiante étant dangereux pour l'environnement et la santé, il était souhaitable de ne plus l'utiliser. Pour le renforcement du ciment, d'autres fibres doivent désormais être utilisées comme agents de renforcement et comme agents de mise en oeuvre.

Les fibres utilisées au lieu des fibres d'amiante doivent présenter les mêmes propriétés que celles propres aux fibres d'amiante. Elles doivent résister aux alcalis tels que les solutions saturées d'hydroxyde de calcium. Les fibres doivent également pouvoir être dispersées aisément dans une suspension aqueuse diluée de ciment. Elles doivent aussi rester dispersées uniformément lors de l'ajout d'autres additifs. La bonne dispersion des fibres est importante d'une part pour s'assurer que ces fibres ne forment pas d'agglomérats et d'autre part pour que la concentration des fibres soit homogène dans le produit en fibres-ciment fini.

Les fibres utilisées en tant qu'agents de renforcement doivent également avoir de bonnes propriétés mécaniques.

La littérature contient des publications à propos de l'utilisation de fibres organiques et inorganiques naturelles ou synthétiques. Ainsi des fibres de cellulose, de polyamide, de polyester, de polyacrylonitrile (PAN), de polypropylène(PP) et de poly(alcool vinylique)(APV) ont été utilisées pour le renforcement. De même, des travaux ont été conduits avec des fibres de verre, d'acier, d'aramide et de carbone. Malheureusement, il ne semble qu'aucune fibre naturelle ou synthétique ne présente toutes les propriétés mentionnées précédemment.

Par ailleurs, il est important de fabriquer des produits façonnés en fibres-ciment ayant de bonnes propriétés mécaniques et à un prix de revient intéressant. Dans cette optique, il est connu d'utiliser des compositions à prise hydraulique comprenant des fibres synthétiques de renforcement.

Parmi les fibres de renforcement actuellement utilisées, les fibres de polyacrylonitrile (PAN) et de poly(alcool vinylique) (APV) sont généralement préférées. Isolément ou en combinaison, ces fibres permettent de fabriquer des produits façonnés en fibres-ciment, qui ont une résistance à la traction et à la flexion élevée. Malheureusement, les fibres APV et les fibres PAN ne confèrent pas aux produits façonnés une résistance à l'impact suffisante, surtout après vieillissement en exposition à l'extérieur.

Les fibres de polypropylène (PP) ont une excellente résistance aux alcalis, même à des températures proches de 110° C. Ces fibres sont durables et peu coûteuses. Cependant, utilisées seules, les fibres de PP sont en général techniquement insuffisantes lorsqu'il s'agit de renforcer des matériaux à base de ciment.

Le document JP2003-267768 divulgue des panneaux hydrauliques obtenus par voie humide comprenant des fibres de renforcement à base d'APV ayant un titre de 6 à 30 dtex. Cependant, les plaques en fibres-ciment façonnées à partir de telles compositions présentent une résistance à l'impact insuffisante lorsqu'elles sont utilisées par exemple pour des applications de toiture, et plus particulièrement après un vieillissement naturel lors de l'exposition au dioxyde de carbone présent dans l'air.

La demande de brevet EP-A 0 155 520 décrit des compositions à prise hydraulique comprenant un mélange de fibres APV et de fibres PAN ayant un titre de 0,5 à 10 dtex. Or, les produits fabriqués à partir de ces compositions ont une résistance à l'impact trop faible.

### Résumé de l'invention

Un but de l'invention est de proposer une composition de produits en fibres-ciment, comprenant des fibres de renforcement comprenant au moins des fibres à base de poly(alcool vinylique) (A) et des fibres organiques synthétiques (B) qui répond aux inconvénients des compositions existantes.

Un but de l'invention est de proposer une composition de produits en fibres-ciment facile à mettre en oeuvre comprenant des fibres de renforcement peu coûteuses, qui résistent aux alcalis, et qui présentent une dispersion homogène et stable ainsi qu'un pouvoir de renforcement élevé. Il s'agit en outre de proposer une composition de produits en fibres-ciment présentant une excellente processabilité, une bonne résistance en flexion et une résistance à l'impact élevée et durable, même après vieillissement en exposition extérieure, et dont le coût n'est pas prohibitif.

A cette fin, la composition selon l'invention est caractérisée en ce que:
- les fibres à base de poly(alcool vinylique) (A) ont un titre d'au moins 4,0 dtex et inférieur à 15,0 dtex ; et
- les fibres organiques synthétiques (B) sont choisies parmi les fibres faites à base de poly(alcool vinylique) présentant un titre d'au moins 1,5 dtex et inférieur à 3,0 dtex, ou à base de polymères ou copolymères de propylène présentant un titre d'au moins 0,7 dtex et inférieur à 3,0 dtex ou encore à base de leurs mélanges.

La composition selon la présente invention comprend des fibres (A) de poly(alcool vinylique) (APV) caractérisée par un titre d'au moins 4,0 dtex et inférieur à 15,0 dtex. Des produits comprenant des fibres (A) d'APV ayant un titre inférieur à 4,0 dtex ont une résistance à l'impact insuffisante. Des produits comprenant des fibres (A) d'APV ayant un titre d'au moins 15,0 dtex ont une résistance en flexion insuffisante.

La composition selon la présente invention comprend des fibres organiques synthétiques (B) choisies parmi les fibres faites à base de poly(alcool vinylique) caractérisées par un titre d'au moins 1,5 dtex et inférieur à 3,0 dtex ou à base de polymères ou copolymères de propylène caractérisées par un titre d'au moins 0,7 dtex et inférieur à 3,0 dtex ou à base de leurs mélanges. Des produits en fibres-ciment comprenant des fibres (B) à base de polymères ou copolymères de propylène ayant un titre inférieur à 0,7 dtex souffrent d'une mauvaise processabilité, alors que des produits comprenant des fibres (B) à base de polymères ou copolymères de propylène ayant un titre d'au moins 3,0 dtex n'ont pas les propriétés mécaniques requises. Des produits en fibres-ciment comprenant des fibres (B) à base de poly(alcool vinylique)ayant un titre inférieur à 1,5 dtex souffrent d'une mauvaise processabilité, alors que des produits comprenant des fibres (B) à base poly(alcool vinylique)ayant un titre d'au moins 3,0 dtex n'ont pas les propriétés mécaniques requises.

Avantageusement, la composition selon la présente invention comprend des fibres (A) de poly(alcool vinylique) ayant un titre d'au moins 5,0 dtex et inférieur à 7,5 dtex.

Selon un mode de réalisation particulier, la composition selon l'invention est caractérisée en ce qu'elle comprend des fibres (A) et des fibres (B) ayant une tenacité d'au moins 8 cN/dtex.

Les produits comprenant des fibres (A) et (B) dont la ténacité est inférieure à 8 cN/dtex, ne disposent pas des propriétés mécaniques requises.

Selon un mode de réalisation avantageux, la composition selon l'invention est caractérisée en ce qu'elle comprend de 0,1 à 5% en poids de fibres (A) et de 0,1 à 5% en poids de fibres (B) par rapport au poids total sec initial de la composition.

Dans un but de facilité de lecture et de clarté, l'expression « pourcentage en poids de fibres » utilisée dans la suite de la description doit être comprise, lorsqu'elle se rapporte à des fibres relatives à une composition, comme « pourcentage en poids de fibres par rapport au poids total sec initial de la composition ».

En effet, des produits en fibres-ciment fabriqués à l'aide de compositions qui comprennent moins de 0,1% en poids de fibres (A) souffrent d'une résistance à l'impact trop faible. Par ailleurs, des produits fabriqués à partir de compositions qui comprennent plus de 5% en poids de fibres (A) ont des propriétés mécaniques insuffisantes dues à une mauvaise dispersion des fibres dans la matrice cimentaire.

Des produits fabriqués à l'aide de compositions, qui comprennent moins de 0,1% en poids de fibres (B) souffrent d'une résistance à l'impact trop faible et/ou d'une résistance en flexion insuffisante. Des compositions, qui comprennent plus de 5% en poids de fibres (B), donnent des produits en fibres-ciment ayant des propriétés mécaniques insuffisantes dues à une mauvaise dispersion des fibres dans la matrice cimentaire.

Avantageusement, la composition selon la présente invention comprend de 0,5 à 2,5% en poids de fibres (A). Une composition comprenant de 0,3 à 2,5% en poids de fibres (B) donne de bons résultats.

Les fibres organiques synthétiques (B) sont choisies parmi les fibres faites à base de poly(alcool vinylique), à base de polymères ou copolymères de propylène, ou de leurs mélanges. Des fibres (B) comprenant un mélange de fibres à base de poly (alcool vinylique) et à base de polymères ou copolymères de propylène sont particulièrement préférées.

Selon un autre mode de réalisation de l'invention, la composition est caractérisée en ce qu'elle comprend des fibres (B) comprenant un mélange de fibres à base de poly(alcool vinylique) ayant un titre d'au moins 1,5 dtex et inférieur à 2,5 dtex et de fibres à base de polymères ou copolymères de propylène ayant un titre d'au moins 0,7 dtex et inférieur à 1,5 dtex.

Selon un mode de réalisation particulier, la composition selon l'invention est caractérisée en ce qu'elle comprend des fibres (B) comprenant de 0,3 à 1,5 % en poids de fibres à base de poly(alcool vinylique) (APV) et de 0,3 à 1,5 % en poids de fibres à base de polymères ou copolymères de propylène (PP) .

Selon un mode de réalisation particulier, la composition selon l'invention est caractérisée en ce qu'elle comprend, en plus des fibres (A) et des fibres (B), de 0, 1 à 5% en poids de fibrilles polyoléfiniques. Par fibrilles, on entend ici un enchevêtrement de microfibres polyoléfiniques qui peuvent, par exemple, être obtenues par filage éclair (« Flash spinning »), c.-à-d. par évaporation instantanée du solvant d'une solution concentrée en fibres par décompression lors de son passage à travers d'un orifice. Les fibrilles polyoléfiniques agissent notamment comme agents de renforcement et de mise en oeuvre. La composition selon l'invention comprend, de préférence, de 0, 5 à 2% en poids de fibrilles polyoléfiniques.

Les compositions selon l'invention comprenant de 0,5 à 2,5% en poids de fibres d'APV (A), de 0,3 à 1,5% en poids de fibres (B) en PP, de 0, 3 à 1,5% en poids de fibres (B) en APV et de 0,5 à 2% en poids de fibrilles polyoléfiniques donnent des résultats particulièrement bons. La composition selon l'invention comprend avantageusement des fibrilles polyoléfiniques à base de polymères ou copolymères de propylène ou d'éthylène. On préfère particulièrement les fibrilles polyoléfiniques obtenues à base de polyéthylène haute densité (PEHD).

Selon un mode particulier de réalisation, les fibres (A) et les fibres (B) de la composition selon l'invention peuvent avantageusement être coupées en longueur pouvant aller de 2 à 20 mm ; de préférence la longueur des fibres s'échelonne de 3 à 11 mm. La section des fibres peut être circulaire ou de forme irrégulière, par exemple en forme de X ou Y. Les fibres peuvent être texturées pendant qu'elles sont étirées ou après.

Selon un mode particulier de réalisation, les fibres (B) à base de polymères ou copolymères de propylène (PP) peuvent également être obtenues à partir d'un film de polypropylène extrudé. Les fibres peuvent alors présenter une forme de ruban. Les fibres (B) à base de PP peuvent être obtenues au départ de résine de tout type de polypropylène couramment utilisé. Au moins une partie des fibres (B) peuvent éventuellement comprendre des charges. Elles peuvent éventuellement comprendre, en outre, un agent d'hydrophilisation tel qu'un sel de métal alcalin d'alkylphosphate, tel qu'un sel de sodium ou de potassium, comportant avantageusement de 8 à 18 atomes de carbone. Suivant une variante d'exécution, les fibres (B) à base de PP peuvent être constituées de polypropylène à haute isotacticité et à distribution étroite des masses moléculaires. Suivant une autre forme d'exécution de l'invention, les fibres (B) à base de PP, peuvent comprendre des fibres bicomposantes coextrudées, consistant, par exemple, en un noyau et une couche extérieure, dont la couche extérieure contient des particules de carbonate de métaux alcalino-terrreux, tels que par exemple, le carbonate de calcium, le carbonate de magnésium ou leurs mélanges. Selon un mode d'exécution avantageux de la présente invention, les fibres (B) à base de PP ont subi un traitement d'oxydation en surface, tel que la décharge par corona ou encore le plasma, en vue d'améliorer leur affinité vis-à-vis de la matrice cimentaire. Selon une variante particulièrement avantageuse de la présente invention, les fibres PP (B) peuvent avoir subi un traitement d'oxydation en surface, suivi d'un traitement à l'aide d'agents de mouillabilité, par aspersion de ou immersion dans une composition d'avivage hydrophile ou d'ensimage, une dispersion aqueuse de polymères organiques polaires ou encore de copolymères et d'homopolymères de monomères oléfiniques modifiés après synthèse par des groupes polaires choisis de préférence parmi l'anhydride maléique, l'acide acrylique, ou l'acide méthacrylique, obtenues par exemple par la voie du greffage.

Selon un mode de réalisation particulier, la composition selon l'invention est caractérisée en ce qu'elle comprend, en plus des fibres (A) et des fibres (B), d'autres fibres de renforcement choisies parmi les fibres inorganiques ou les fibres organiques.

De préférence, les fibres organiques sont choisies parmi des fibres de polyacrylonitrile, de polyamide, de polyester, d'aramide, de carbone et de polyoléfines. Avantageusement, les fibres inorganiques sont choisies parmi les fibres de verre, la laine de roche, la laine de laitier, les fibres de wollastonite, les fibres de céramique et analogues.

Selon un mode particulier de réalisation, la composition selon l'invention est caractérisée en ce qu'elle comprend du ciment comme liant hydraulique. Avantageusement, le ciment est choisi parmi le ciment Portland, le ciment à haute teneur en alumine, le ciment Portland de fer, le ciment de trass, le ciment de laitier, le plâtre, les silicates de calcium formés par traitement à l'autoclave et les combinaisons de liants particuliers. Le ciment Portland convient particulièrement bien.

Selon un mode particulier de réalisation, la composition selon l'invention est caractérisée en ce que le ciment comprend des charges et additifs, notamment afin d'améliorer le comportement d'égouttage des suspensions. Les additifs sont de préférence choisis parmi les dispersants, les plastifiants et les flocculants. Les charges sont avantageusement choisies parmi les cendres volantes, la silice amorphe, le quartz moulu, la roche moulue, les argiles, les laitiers de haut-fourneau, les carbonates, les pouzzolanes, etc. La quantité totale de charge est, de préférence, inférieure à 50 % en poids par rapport au poids total sec initial de la composition.

Avantageusement, la composition selon l'invention comporte des fibres de mise en oeuvre de préférence, en une quantité égale ou inférieure à 10 % en poids par rapport au poids total sec initial de la composition. Les fibres de cellulose se révèlent particulièrement adaptées pour constituer une armature de filtration des particules du ciment.

Un des buts de l'invention est de proposer des produits en fibres-ciment ayant à la fois une bonne résistance en flexion et une excellente résistance à l'impact, même après vieillissement. A ce titre, le produit en fibres-ciment selon l'invention est caractérisé en ce qu'il est fabriqué à partir d'une composition selon la présente invention.

Le produit selon l'invention présente une bonne résistance à l'impact Charpy, mesurée selon la norme ASTM D-256-81 (méthode B), même après vieillissement lors de l'exposition au dioxyde de carbone. Par ailleurs, le produit selon la présente invention a un module en flexion élevé.

Selon un mode particulier de réalisation, le produit selon l'invention est de préférence un élément de toiture ou de façade, une plaque plane ou ondulée. La composition selon l'invention est particulièrement adaptée à la fabrication de plaques ondulées. Selon un autre mode particulier de réalisation, le produit a la forme d'un tuyau, d'un élément de réservoir de stockage ou de toutes autres formes d'accessoires de formes diverses.

### Description détaillée de modes de réalisation particuliers

Il sera évident pour l'homme du métier que la présente invention n'est pas limitée à ce qui a été divulgué et décrit en particulier ci-dessus. L'invention réside dans la présentation de toutes caractéristiques nouvelles et dans chaque combinaison de ces caractéristiques. Les références numériques dans les revendications, ne limitent pas la portée de leur protection. L'usage des verbes « comprendre, comporter ou inclure » et leurs formes conjuguées, n'exclut pas la présence d'autres éléments que ceux énumérés dans les revendications. L'usage de l'article « un/une » devant un élément, n'exclut pas la présence d'une pluralité de tels éléments.

L'invention est décrite ci-après de façon détaillée à l'aide d'exemples particuliers de réalisation.

### EXEMPLES

### Caractéristiques des fibres de renforcement utilisées

**Tableau I**

| Nature | Producteur | Type | Titre (dtex) | Longueur (mm) | Tenacité (cN/dtex) |
|---|---|---|---|---|---|
| APV (B) | Kuraray | RMH182 | 2,0 | 6 | 14,3 |
| APV(A) | Sichuan Vinylon Works | HM PVA | 5,5 | 6 | 11 |
| APV(A) | Kuraray | K II | 7,0 | 6 | 11,5 |
| PP (B) | Daiwabo | E12-C | 0,9 | 6 | 9,5 |
| SWP (*) | Mitsui | E524 | | 1 | |

| | | | | | |
|---|---|---|---|---|---|
| (*) SWP : « Synthetic Wood Pulp » : pâte synthétique à base de microfibres de PEHD (fibrilles). | | | | | |

Les fibres PP (B) Daiwabo E12-C ont subi un traitement corona.

### Préparation des mélanges et mise en oeuvre sur machine Mini-Hatschek

Des produits cimentaires ont été fabriqués par la technique Hatschek, suivant une méthode pilote reproduisant assez fidèlement les caractéristiques principales des produits obtenus par des méthodes industrielles.

Les compositions mises en oeuvre après forte dilution avec de l'eau, sont reprises dans les tableaux II et III (concentrations en solides exprimées en % en poids par rapport à la matière sèche totale) et dans lesquels les fibres de mise en oeuvre SUKP concernent une pâte non blanchie de résineux raffinée jusqu'a 65° SR (Schopper-Riegler) et P30 désigne le ciment Portland.

On fait durcir les plaques pendant une nuit à 50°C, puis sous couverture de feuille plastique pendant 7 jours à température ambiante.

### Echantillonnage

Les plaques sont sciées afin d'obtenir les dimensions souhaitées. On détermine les propriétés mécaniques après vieillissement dans une étuve de 600 1 à 60°C, 90 % d'humidité relative, avec injection de 1,5 l/min de CO₂ pendant 24 heures ; la concentration en CO₂ varie ainsi de 7 % au début du conditionnement à 12 % à la fin du conditionnement.

### Détermination de la résistance à l'impact Charpy

La résistance à l'impact Charpy est déterminée selon la norme ASTM D-256-81, méthode B, à l'aide d'un appareil Zwick DIN 5102.100/00 sur des échantillons secs à l'air de 15 sur 120 mm et avec une distance entre appuis de 100 mm. Dix échantillons sont mesurés dans les deux directions (direction machine et direction perpendiculaire à celle-ci). Les résultats (moyenne de 20 mesures) sont exprimés en % par rapport à une référence correspondant à l'exemple comparatif 1 du tableau II.

### Détermination de la résistance en flexion

La résistance en flexion est déterminée par un test classique de flexion sur trois points à l'aide d'un appareil UTS, en utilisant une distance entre appuis de 146 mm et une vitesse de mise en charge de 20 mm/minute. Dix échantillons saturés en eau sont mesurés dans les deux directions (direction machine et direction perpendiculaire à celle-ci). L'appareil enregistre la courbe contrainte/déformation et permet de déterminer le module de rupture (MOR). Les résultats (moyenne de 20 mesures) sont exprimés en % par rapport à une référence correspondant à l'exemple comparatif 1 du tableau II.

**Tableau II - Exemples comparatifs**

| Composition | | Ex 1 | Ex 2 | Ex 3 | Ex 4 | Ex 5 | Ex 6 | Ex 7 |
|---|---|---|---|---|---|---|---|---|
| COMPOSITION (%pds) | | | | | | | | |
| Fibres B | RMH182 | 2 | | | | | | 1,6 |
| Fibres B | E12-C | | | | 2 | | 2,5 | 0,8 |
| Fibres A | K II | | 2 | | | | | |
| Fibres A | HM PVA | | | 2 | | 2,5 | | |
| SUKP 65SR | | 3 | 3 | 3 | 3 | 3 | 3 | 3 |
| Silice amorphe | | 6,4 | 6,4 | 6,4 | 6,4 | 6,4 | 6,4 | 6,4 |
| CaCO₃ broyé | | 10 | 10 | 10 | 10 | 10 | 10 | 10 |
| P30 | | 78,6 | 78,6 | 78,6 | 78,6 | 78,1 | 78,1 | 78,2 |

| PROPRIETES MECANIQUES | | | | | | | | |
|---|---|---|---|---|---|---|---|---|
| Charpy Impact (%/référence) | | 100 | 118 | 109 | 159 | 127 | 236 | 148 |
| MOR (%/référence) | | 100 | 81 | 71 | 76 | 81 | 76 | 71 |

Il ressort des résultats obtenus dans les exemples comparatifs 1 à 4 du tableau II que des compositions comprenant uniquement des fibres (A) ou des fibres (B) ont une résistance à l'impact insuffisante et/ou un module de résistance en flexion trop faible. Une augmentation de la concentration en fibres (A) (comme le montre l'exemple comparatif 5) ou en fibres (B) (comme le montre l'exemple comparatif 6) ne conduit pas à la fois à une résistance à l'impact suffisante et à un module de résistance en flexion suffisant. L'utilisation d'un mélange d'APV ayant un titre de 2,0 dtex et de PP ayant un titre de 0,9 dtex comme dans l'exemple comparatif 7 mène à un module de rupture trop faible.

**Tableau III - Exemples selon l'invention**

| Composition | | Ex 1 | Ex 2 | Ex 3 | Ex 4 | Ex 5 | Ex 6 |
|---|---|---|---|---|---|---|---|
| COMPOSITION (%pds) | | | | | | | |
| Fibres B | RMH182 | 1 | 1 | 1 | | 0,7 | 1 |
| Fibres B | E12-C | | | 0,5 | 0,5 | 0,8 | 0,5 |
| Fibres A | K II | 1,5 | | 1 | 2 | 1 | 1 |
| Fibres A | HM PVA | | 1,5 | | | | |
| SUKP 65SR | | 3 | 3 | 3 | 3 | 3 | 1,5 |
| Fibrilles PEHD | E524 | | | | | | 1,5 |
| Silice amorphe | | 6,4 | 6,4 | 6,4 | 6,4 | 6,4 | 6,4 |
| CaCO₃ broyé | | 10 | 10 | 10 | 10 | 10 | 10 |
| P30 | | 79,1 | 79,1 | 79,1 | 78,1 | 78,8 | 79,1 |

| PROPRIETES MECANIQUES | | | | | | | |
|---|---|---|---|---|---|---|---|
| Charpy Impact (%/référence) | | 136 | 132 | 159 | 136 | 150 | 173 |
| MOR (%/référence) | | 100 | 100 | 102 | 100 | 100 | 100 |

La comparaison de l'exemple 2 du tableau III avec l'exemple comparatif 5 du tableau II montre qu'en remplaçant une partie des fibres (A) en APV par des fibres (B) en APV, on améliore la résistance en flexion, tout en maintenant une bonne résistance à l'impact.

Les exemples 3 et 5 du tableau III montrent que les meilleurs résultats sont obtenus avec des fibres (B) comprenant des fibres en APV et en PP.

De même, la comparaison des exemples 3 et 6 du tableau III montre qu'en substituant une partie des fibres cellulosiques par des fibrilles à base de PEHD, on améliore davantage la résistance à l'impact.

La présente invention a été décrite en termes de réalisations spécifiques qui sont une illustration de l'invention et qui ne doivent pas être considérées comme limitatives.

## Revendications

1. Composition de produits en fibres-ciment comprenant des fibres de renforcement comprenant au moins des fibres à base de poly (alcool vinylique) (A) et des fibres organiques synthétiques (B), **caractérisée en ce que**:
- les fibres à base de poly (alcool vinylique) (A) ont un titre d'au moins 4,0 dtex et inférieur à 15,0 dtex ; et
- les fibres organiques synthétiques (B) choisies parmi les fibres faites à base de poly(alcool vinylique)présentant un titre d'au moins 1,5 dtex et inférieur à 3,0 dtex, ou à base de polymères ou copolymères de propylène présentant un titre d'au moins 0,7 dtex et inférieur à 3,0 dtex ou à base de leurs mélanges.

2. Composition selon la revendication 1, **caractérisée en ce que** les fibres (A) ont un titre d'au moins 5,0 dtex et inférieur à 7,5 dtex.

3. Composition selon l'une des revendications précédentes, **caractérisée en ce que** les fibres (A) et (B) ont une ténacité d'au moins 8 cN/dtex.

4. Composition selon l'une des revendications précédentes, **caractérisée en ce que** les fibres (A) et (B) ont une longueur de 3 à 11 mm.

5. Composition selon l'une des revendications précédentes, **caractérisée en ce qu'**elle comprend de 0,1 à 5% en poids de fibres (A) par rapport au poids total sec initial de la composition.

6. Composition selon l'une des revendications précédentes, **caractérisée en ce qu'**elle comprend de 0,1 à 5% en poids de fibres (B) par rapport au poids total sec initial de la composition.

7. Composition selon la revendication 5, **caractérisée en ce qu'**elle comprend de 0,5 à 2,5% en poids de fibres (A).

8. Composition selon la revendication 6, **caractérisée en ce qu'**elle comprend de 0,3 à 2,5% en poids de fibres (B).

9. Composition selon l'une quelconque des revendications 1 à 6, **caractérisée en ce que** les fibres (B) comprennent de 0,3 à 1,5% en poids de fibres à base de poly(alcool vinylique) et de 0,3 à 1,5% en poids de fibres à base de polypropylène par rapport au poids total sec initial de la composition.

10. Composition selon l'une quelconque des revendications précédentes, **caractérisée en ce que** les fibres (B) comprennent des fibres à base de poly(alcool vinylique) ayant un titre d'au moins 1,5 dtex et inférieur à 2,5 dtex.

11. Composition selon l'une quelconque des revendications précédentes, **caractérisée en ce que** les fibres (B) comprennent des fibres à base de polymères ou copolymères de propylène ayant un titre d'au moins 0,7 dtex et inférieur à 1,5 dtex.

12. Composition selon l'une quelconque des revendications précédentes, **caractérisée en ce qu'**elle comprend, en plus des fibres (A) et des fibres (B), de 0,1 à 5% en poids de fibrilles polyoléfiniques par rapport au poids total sec initial de la composition.

13. Composition selon la revendication 12, **caractérisée en ce qu'**elle comprend de 0,5 à 2% en poids de fibrilles polyoléfiniques par rapport au poids total sec initial de la composition.

14. Composition selon l'une des revendications 12 ou 13, **caractérisée en ce que** les fibrilles polyoléfiniques sont choisies parmi des fibrilles à base de polymères ou copolymères de propylène ou d'éthylène ou de leurs mélanges.

15. Composition selon l'une quelconque des revendications précédentes, **caractérisée en ce que** les fibres organiques synthétiques (B) à base de polymères ou copolymères de propylène ont subi un traitement d'oxydation en surface.

16. Produit façonné en fibres-ciment fabriqué au moyen d'une composition selon l'une quelconque des revendications 1 à 15.

17. Produit façonné en fibres-ciment selon la revendication 16, **caractérisé en ce qu'**il consiste en une plaque plane ou ondulée.

## Claims

1. Composition of fibre-cement products comprising reinforcing fibres comprising at least fibres containing poly(Vinylalcohol) (A) and of synthetic organic fibres (B), **characterized in that**:
- the fibres containing poly(vinylalcohol) (A) have a titre of at least 4,0 dtex and lower than 15,0 dtex; and
- synthetic organic fibres (B) selected among fibres made of poly(Vinylalcohol) having a a titre of at least 1,5 dtex and lower than 3,0 dtex, or made of polymers or copolymers of propylene having a titre of at least 0,7 dtex and lower than 3,0 dtex or their blends.

2. Composition according to claim 1, **characterized in that** the fibres (A) have a titre of at least 5,0 dtex and lower than 7,5 dtex.

3. Composition according to one of the preceding claims, **characterized in that** the fibres (A) and (B) have a tenacity of at least 8 cN/dtex.

4. Composition according to one of the preceding claims, **characterized in that** the fibres (A) and (B) have a length of 3 to 11 mm.

5. Composition according to one of the preceding claims, **characterized in that** it comprises from 0,1 to 5 weight % of fibre (A) with respect to the total initial dry weight of the composition.

6. Composition according to one of the preceding claims, **characterized in that** it comprises from 0,1 to 5 weight % of fibre (B) with respect to the total initial dry weight of the composition.

7. Composition according to claim 5, **characterized in that** it comprises from 0,5 to 2,5 weight % of fibre (A).

8. Composition according to claim 6, **characterized in that** it comprises from 0,3 to 2,5 weight % of fibres (B).

9. Composition according to any of claims 1 to 6, **characterized in that** the fibres (B) comprise from 0,3 to 1,5 weight % of fibres made poly(vinylalcohol) and from 0,3 to 1,5 weight % of fibres made of polypropylene with respect to the total initial dry weight of the composition.

10. Composition according to any of the preceding claims, **characterized in that** the fibres (B) comprise fibres made of poly(vinylalcohol) having a titre of at least 1,5 dtex and lower than 2,5 dtex.

11. Composition according to any of the preceding claims, **characterized in that** the fibres (B) comprise fibres made of polymers or copolymers of propylene having a titre of at least 0,7 dtex and lower than 1,5 dtex.

12. Composition according to any of the preceding claims, **characterized in that** it comprises, besides the fibres (A) and the fibres (B), from 0,1 to 5 weight % of polyolefinic fibrils with respect to the total initial dry weight of the composition.

13. Composition according to claim 12, **characterized in that** it comprises from 0,5 to 2 weight % of polyolefinic fibrils with respect to the total initial dry weight of the composition.

14. Composition according to one of the claims 12 or 13, **characterized in that** the polyolefinic fibrils are selected among fibrils made of polymers or copolymers of propylene or ethylene or their blends.

15. Composition according to any of the preceding claims, **characterized in that** synthetic organic fibres (B) are made of polymers or copolymers of propylene which were subjected to an oxidation surface treatment.

16. Fibre-cement product manufactured by means of a composition according to any of claims 1 to 15.

17. Fibre-cement product according to claim 16, **characterized in that** it is a flat or corrugated sheet.

## Patentansprüche

1. Zusammensetzung von Produkten aus Faserzement, umfassend Verstärkungsfasern, umfassend mindestens Fasern auf der Grundlage von Polyvinylalkohol (A) und synthetische organische Fasern (B), **dadurch gekennzeichnet, dass**
- die Fasern auf der Grundlage von Polyvinylalkohol (A) einen Titer von mindestens 4,0 dtex und weniger als 15,0 dtex aufweisen; und
- die synthetischen organischen Fasern (B), ausgewählt aus den Fasern, die auf der Grundlage von Polyvinylalkohol hergestellt sind, einen Titer von mindestens 1,5 dtex und weniger als 3,0 dtex aufweisen, oder auf der Grundlage von Propylen-Polymeren oder - Copolymeren einen Titer von mindestens 0,7 dtex und weniger als 3,0 dtex aufweisen oder auf der Grundlage ihrer Mischungen.

2. Zusammensetzung nach Anspruch 1, **dadurch gekennzeichnet, dass** die Fasern (A) einen Titer von mindestens 5,0 dtex und weniger als 7,5 dtex aufweisen.

3. Zusammensetzung nach einem der vorhergehenden Ansprüche, **dadurch gekennzeichnet, dass** die Fasern (A) und (B) eine Zähigkeit von mindestens 8 cN/dtex aufweisen.

4. Zusammensetzung nach einem der vorhergehenden Ansprüche, **dadurch gekennzeichnet, dass** die Fasern (A) und (B) eine Länge von 3 bis 11 mm aufweisen.

5. Zusammensetzung nach einem der vorhergehenden Ansprüche, **dadurch gekennzeichnet, dass** sie von 0,1 bis 5 Gew.% Fasern (A) bezüglich des gesamten anfänglichen Trockengewichts der Zusammensetzung umfasst.

6. Zusammensetzung nach einem der vorhergehenden Ansprüche, **dadurch gekennzeichnet, dass** sie von 0,1 bis 5 Gew.% Fasern (B) bezüglich des gesamten anfänglichen Trockengewichts der Zusammensetzung umfasst.

7. Zusammensetzung nach Anspruch 5, **dadurch gekennzeichnet, dass** sie von 0,5 bis 2,5 Gew.% Fasern (A) umfasst.

8. Zusammensetzung nach Anspruch 6, **dadurch gekennzeichnet, dass** sie von 0,3 bis 2,5 Gew.% Fasern (B) umfasst.

9. Zusammensetzung nach einem der Ansprüche 1 bis 6, **dadurch gekennzeichnet, dass** die Fasern (B) von 0,3 bis 1,5 Gew.% Fasern auf der Grundlage von Polyvinylalkohol und 0,3 bis 1,5 Gew.% Fasern auf der Grundlage von Polypropylen bezüglich des gesamten anfänglichen Trockengewichts der Zusammensetzung umfassen.

10. Zusammensetzung nach einem der vorhergehenden Ansprüche, **dadurch gekennzeichnet, dass** die Fasern (B) Fasern auf der Grundlage von Polyvinylalkohol mit einem Titer von mindestens 1,5 dtex und weniger als 2,5 dtex umfassen.

11. Zusammensetzung nach einem der vorhergehenden Ansprüche, **dadurch gekennzeichnet, dass** die Fasern (B) Fasern auf der Grundlage von Propylen-Polymeren oder -Copolymeren mit einem Titer von mindestens 0,7 dtex und weniger als 1,5 dtex umfassen.

12. Zusammensetzung nach einem der vorhergehenden Ansprüche, **dadurch gekennzeichnet, dass** sie außer Fasern (A) und Fasern (B) von 0,1 bis 5 Gew.% Polyolefinfibrillen bezüglich des gesamten anfänglichen Trockengewichts der Zusammensetzung umfasst.

13. Zusammensetzung nach Anspruch 12, **dadurch gekennzeichnet, dass** sie von 0,5 bis 2 Gew.% Polyolefinfibrillen bezüglich des gesamten anfänglichen Trockengewichts der Zusammensetzung umfasst.

14. Zusammensetzung nach einem der Ansprüche 12 oder 13, **dadurch gekennzeichnet, dass** die Polyolefinfibrillen ausgewählt sind aus Fibrillen auf der Grundlage von Propylen- oder Ethylen-Polymeren oder -Copolymeren oder ihren Mischungen.

15. Zusammensetzung nach einem der vorhergehenden Ansprüche, **dadurch gekennzeichnet, dass** die synthetischen organischen Fasern (B) auf der Grundlage von Propylen-Polymeren oder -Copolymeren einer Oxidationsbehandlung auf der Oberfläche unterzogen wurden.

16. Produkt, gebildet aus Faserzement, hergestellt aus einer Zusammensetzung nach einem der Ansprüche 1 bis 15.

17. Produkt, hergestellt aus Faserzement nach Anspruch 16, **dadurch gekennzeichnet, dass** es aus einer ebenen oder gewellten Platte besteht.
